# EUROPEAN PATENT APPLICATION

(11) **EP 0 918 411 A1**
(43) Date of publication of application: **26.05.1999**
(21) Application number: 98111461.4
(22) Date of filing: 22.06.1998
(51) Int. Cl.: H04L 12/24, H04L 29/12

(54) **Batch configuration of network devices**

(30) Priority: 21.11.1997 US 975942
(71) Applicant: Hewlett-Packard Company, Palo Alto, California 94304 (US)
(72) Inventor: Gase, Stephen T., Boise, Idaho 83709 (US)
(74) Representative: Schoppe, Fritz, Dipl.-Ing.

(57) **Abstract**

A method and apparatus which allows a network administrator to both remotely initially configure one or more network devices (12) and to simultaneously configure a group of network devices (12) remotely, also referred to as batch configuration. Initially, the invention can communicate with newly installed network devices 12 using manufacturer assigned default IP addresses coupled with a device unique hardware address, also known media access control address (MAC address). Once a new device 12 is uniquely identified in this way, a new unique IP address may be assigned by the invention and/or other remotely configurable parameters may be modified.

## Description

### FIELD OF THE INVENTION

This invention generally relates to remote configuration of network devices. More particularly, this invention relates to an apparatus and method for remotely configuring a group of network devices, such as printers or the like, in a single configuration step.

### BACKGROUND OF THE INVENTION

Network devices typically have several features or parameters which must be configured by the network administrator from time to time. These parameters and features include assigning IP addresses (internet protocol addresses); subnet masks; IP gateway addresses; proxy server assignments; community names; device passwords; location descriptions; system contact; frame type selections; protocol stack selections; and even altering device behavior settings.

Prior to this invention, a network administrator was forced to perform some operation at the device level such as entering the IP address at the control panel of the network device before the network administrator could interact with the device over the network. This required the network administrator to travel to the physical location of the device, which was both costly and time consuming. While recent improvements have enabled network administrators to accomplish initial configuration remotely, the network administrators are still required to do this separately for each and every device which is attached to the network. Oftentimes, a group of similar devices which are attached to a network need to be reconfigured, or a group of newly installed devices needs to be initially configured. Again, the prior solution requires network administrators to either physically go to each one of the devices or to interact with each device over the network independently, one device at a time.

Another problem which existed prior to this invention was the inability of a network administrator to automatically assign unique IP addresses, to the devices within a group of devices at the same time. The following illustration exemplifies the problem. Assume a network administrator needs to reclassify his network into two or more subnets which are grouped according to the new department which each user belongs. The devices within each subnet must have IP addresses which lie within a specific range of addresses, the addresses assigned to that subnet. Prior to the invention, the system administrator had to separately change the IP address of each network device and make sure that no other device on the network already had the newly assigned IP address.

### SUMMARY OF THE INVENTION

One embodiment of the present invention provides a method and apparatus which allows a network administrator to both remotely initially configure one or more network devices and to simultaneously configure a group of network devices remotely, also referred to as batch configuration. Initially, the invention can communicate with newly installed network devices using manufacturer assigned default IP addresses coupled with a device unique hardware address, also known media access control address (MAC address). Once a new device is uniquely identified in this way, a new unique IP address may be assigned by the invention and/or other remotely configurable parameters may be modified.

The batch configuration aspect of the invention can use a number of differing criteria on which to select network devices to be configured. The invention accomplishes this task using one or more filters which select network devices according to specific criteria. For example, the invention can select network devices based upon their remotely setable parameters such as their location description, their IP addresses within a range of IP addresses or common device capabilities. Additionally, the invention saves the settings for specific devices and groups of devices within a database which can then be reused and applied to new devices, reinstalled devices and/or used to aid future selection and as further filtering criteria. Once the devices to be reconfigured have been selected, the network administrator changes the parameter(s) in question with a single input and initiates the reconfiguration sequence. The invention then sends the reconfiguration data to each of the network devices separately without any further system administrator intervention.

The invention also allows a system administrator to automatically assign unique IP addresses, selected from a range of IP addresses, to the network devices within a group. This ability solves the problem illustrated earlier in this disclosure. Once the system administrator selects the devices which will have their IP addresses reassigned, the system administrator then enters a range of IP addresses from which the reassigned addresses will be selected. The invention then selects a first address from within the range and verifies that it is a valid address. Once this is confirmed, the invention determines whether or not the address is being used by any other device on the network. If the address is already in use, the invention skips that value and selects the next address within the range. If the selected address is not in use, the invention will assign this IP address to the next device from the device selection list and so configure the device. Once this device has been successfully reconfigured, the range limits are reset to the remaining values within the originally specified range and the process is repeated until all selected devices have been reconfigured or there are no more available IP addresses.

Advantageously, the invention may have a web based graphical user interface for system administrator interaction and even network user interaction. The invention can assign each device on the network a separate URL (uniform resource locator) enabling each device to have its own web page on which device parameters can be displayed and changed.

Normally, the software aspect of the invention resides on a network server or workstation which is connected to the subject network. A full time local connection is desirable but not necessary. In general terms the software includes: 1) an interface; 2) a database; and 3) a configuration engine. The interface provides a user, such as the system administrator, with a way of inputting and receiving information to and from the invention. The database is populated with information concerning the various devices connected to the network and can contain such information as their hardware addresses; IP addresses; subnet masks; IP gateway addresses; proxy server assignments; community names; device passwords; location descriptions; system contact; frame type selections; protocol stack selections; and device characteristics and settings. The configuration engine is responsible for generating and monitoring network communications specific to the configuration of network devices and updating the database with any configuration changes implemented.

The invention can be implemented on a variety of network topologies and network architectures, including ethernet and token ring architectures, employing a variety of network protocols, including TCP/IP (Transmission Control Protocol/Internet Protocol), IPX (Internetwork Packet Exchange), DLC (Data Link Control), and AppleTalk.

### DESCRIPTION OF THE DRAWINGS

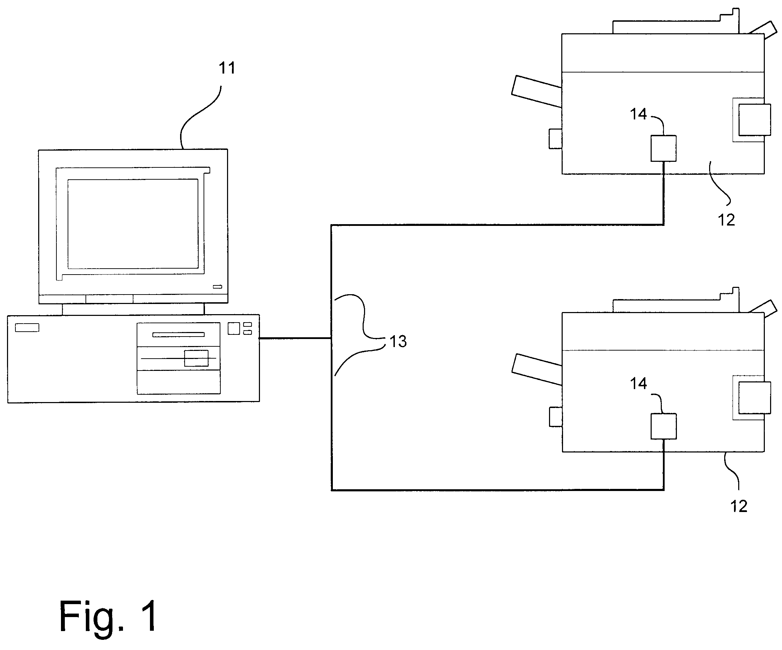

Fig. 1 is a schematic representation of a network on which one embodiment of the invention may be implemented;

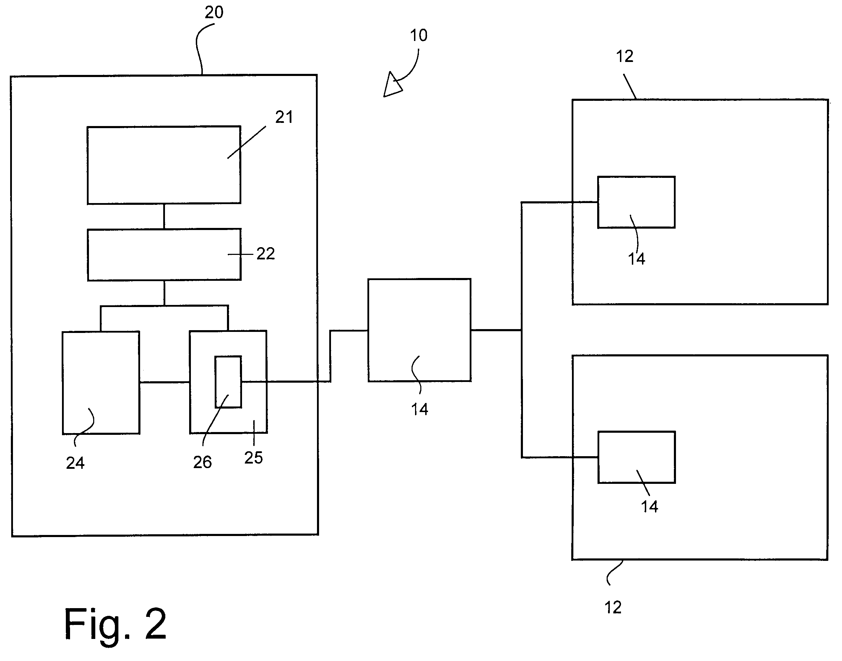

Fig. 2 is a block diagram of the software aspect of one embodiment of the invention;
Fig. 3 is a flow diagram of one embodiment of the invention; and
Fig. 4 is a flow diagram of a method for automatically assigning a unique IP address selected from a range of IP addresses to each device within a group of selected devices.

### DETAILED DESCRIPTION OF THE INVENTION

Referring now to the figures one embodiment of a system, software application and method for batch configuration of network devices is described in detail. The system is generally designated in the figures at 10 and includes a host device 11, such as a personal computer or workstation, and two or more network devices 12, such as printers, which in this embodiment include network interface cards 14, such as Hewlett Packard® JetDirect® network cards, connected by a communications link such as cabling 13. Software 20 according to the invention is installed on host device 11 and may include an interface 21, an interface translator 22, a database 24 and a configuration engine 25. Here, configuration engine 25 includes a SNMP (Simple Network Management Protocol) translator 26 which communicates with the other network devices via the network.

Interface 21 provides a user, such as the system administrator, with a way of inputting and receiving information to and from database 24 and configuration engine 25. Here, interface 21 is a web page interface which is displayed on the display screen of host 11. Interface 21 is in this embodiment created by interface translator 22 which displays a graphic user interface using HTML (HyperText Markup Language) and CGI (Computer Graphics Interface) compliant code. Interface 21 both displays network device information such as the available devices and their existing settings and parameters, as well as allows a user to change the settings and parameters and initiate reconfiguration sequences.

Database 24 is populated with information about all of the network devices currently connected to the network. This information can include details like the currently assigned IP address, the port number, the hardware address, the IP hostname, the IPX name, the device model, the IP gateway, a device description, a system contact, a device password, and device specific behavior characteristics. Database 24 can be as simple as a single flat file database stored on host 11 or it can be more complex such as a relational database which might include reference lookup tables containing additional information about different devices which are likely to be attached to the network.

Configuration engine 25 is responsible for generating and monitoring network communications specific to the configuration of network devices 12. Configuration engine 25 obtains existing information from database 24 and displays this information on interface 21 through interface translator 22. User input is obtained through interface 21 and interface translator 22 and validated by configuration engine 25. This input is then processed by configuration engine 25 and a reconfiguration sequence is initiated through SNMP translator 26. Configuration engine 25 continues to monitor network communications until it receives an indication that the reconfiguration has been completed. Once the configuration changes are completed, configuration engine 25 updates the corresponding information within database 24.

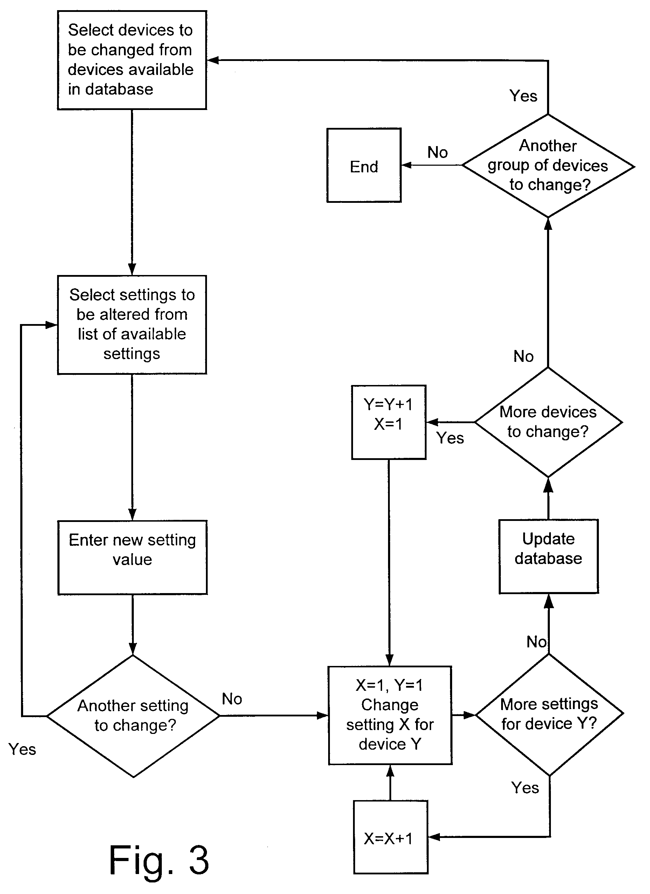

A general method employed by one embodiment of the invention is illustrated in Fig. 3. Beginning with the box in the upper left hand corner of Fig. 3, the first step is for the user to select the network devices from the list of available devices on which one or more parameters are to be changed. Proceeding now in a counter clockwise direction from the upper left hand corner of Fig. 3, the next step is for the user to select a setting to be altered on the group of selected devices. Next the user enters the new value for the selected setting. These to steps are repeated for the desired number of settings. Once all of the values are entered for all of the settings to be changed, the user can initiate the reconfiguration sequence via interface 21. Configuration engine 25 then sends the setting changes to a first device from the group of selected devices. Once these change have been completed and verified, configuration engine 25 updates the corresponding information in database 24 and sends the changes to the next device in the group of selected devices.

This process is accomplished in the method illustrated in Fig. 3 by the use of two counters X and Y, where X represents the number of settings to be changed and Y represents the number of devices within the selected group. It should be noted that a single transmission by configuration engine 25 can contain more than a single setting change so that multiple settings can be changed essentially simultaneously. Once all of the setting changes have been implemented in all selected devices and recorded in database 24, another group of devices can be selected or the configuration program can be terminated.

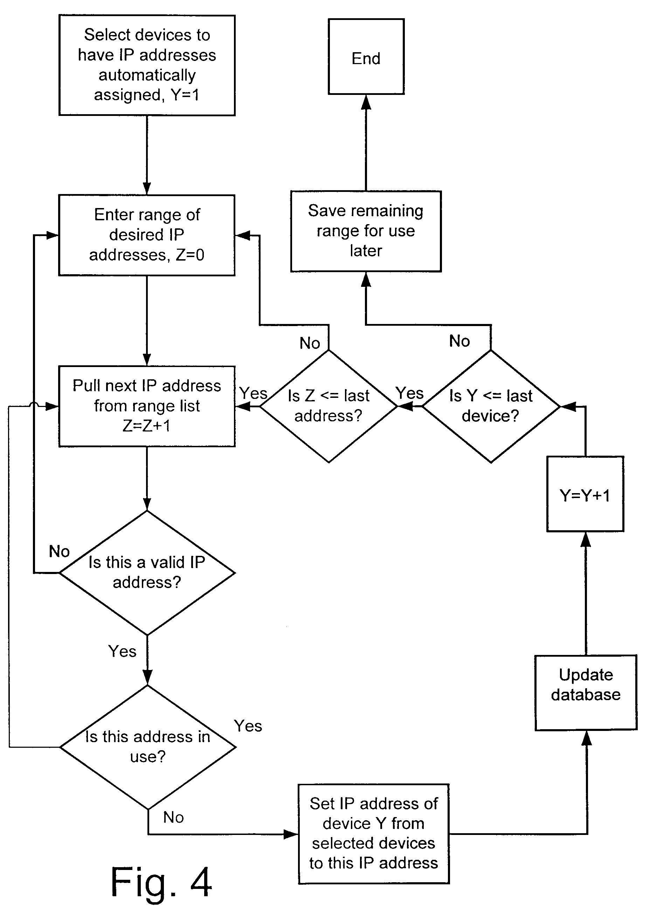

Configuration engine 25 allows a user to automatically assign unique IP addresses, each selected from a range of IP addresses to the network devices within a group. One method for accomplishing this task according to the invention is illustrated in Fig. 4. Once the user selects the devices which will have their IP addresses reassigned, the user then enters a range of IP addresses from which the reassigned addresses will be selected. Configuration engine 25 then selects a first address from within the range and verifies that it is a valid address. Once this is confirmed, configuration engine 25 determines whether or not the address is being used by any other device on the network by attempting to communicate with that address. If the address is already in use, configuration engine resets the range limits and selects the next address within the range. If the selected address is not in use, configuration engine 25 will assign this IP address to the next device from the device selection list, configure the device and update database 24. Once this device has been successfully reconfigured, the range limits are reset and the process is repeated until all selected devices have been reconfigured or there are no more available IP addresses.

## Claims

1. A method for configuring multiple devices (12) on a computer network comprising the acts of:
selecting a plurality of devices (12) to be configured from a database (24) containing a list of network devices (12);
selecting at least one setting to be changed on the selected network devices (12);
entering a new setting value for each of the selected settings;
transmitting any new setting values to a first selected device (12);
updating the database (24) with the new setting values; and
repeating the previous two acts for each of the selected devices.

2. A method for automatically assigning IP addresses from a range of IP addresses to the devices within a group of network devices (12), comprising the acts of:
selecting a plurality of devices (12) to assign IP addresses to from a database (24) containing a list of network devices (12);
entering a range of IP addresses;
validating a first IP address from the range of IP addresses to select a useable IP address;
in case of an invalid IP address, selecting and validating a next IP address from the range of IP addresses;
repeating the previous act until a valid IP address is selected;
transmitting a first valid IP address to a first selected device (12);
updating the database (24) with this IP address; and
repeating the previous four acts for each of the selected devices (12).

3. An apparatus for configuring multiple devices on a computer network which comprises:
a computer containing software that when executed by the computer performs the acts of:
selecting a plurality of devices to be configured from a database containing a list of network devices;
selecting at least one setting to be changed on the selected network devices;
entering a new setting value for each of the selected settings;
transmitting any new setting values to a first selected device;
updating the database with the new setting values; and
repeating the previous two acts for each of the selected devices.

4. An apparatus for automatically assigning IP addresses from a range of IP addresses to the devices within a group of network devices, which comprises:
a computer containing software that when executed by the computer performs the acts of:
selecting a plurality of devices to assign IP addresses to from a database containing a list of network devices;
entering a range of IP addresses;
validating a first IP address from the range of IP addresses to select a useable IP address;
in case of an invalid IP address, selecting and validating a next IP address from the range of IP addresses;
repeating the previous act until a valid IP address is selected;
transmitting a first valid IP address to a first selected device;
updating the database with this IP address; and
repeating the previous four acts for each of the selected devices.
